(19) Europäisches Patentamt
European Patent Office
Office européen des brevets

(11) **EP 4 765 858 A1**

(12) **EUROPEAN PATENT APPLICATION**
published in accordance with Art. 153(4) EPC

(43) Date of publication:
**24.06.2026 Bulletin 2026/26**

(21) Application number: **24876724.6**

(22) Date of filing: **14.10.2024**

(51) International Patent Classification (IPC):
**H04Q 11/00** (2006.01)

(52) Cooperative Patent Classification (CPC):
**H04Q 11/00**

(86) International application number:
**PCT/CN2024/124692**

(87) International publication number:
**WO 2025/077919 (17.04.2025 Gazette 2025/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **13.10.2023 CN 202311327280**
**11.10.2024 CN 202411419927**

(71) Applicant: **HUAWEI TECHNOLOGIES CO., LTD.**
**Shenzhen 518129 (CN)**

(72) Inventors:
• **XU, Jian**
**Shenzhen, Guangdong 518129 (CN)**
• **ZHANG, Xuejin**
**Shenzhen, Guangdong 518129 (CN)**

(74) Representative: **Isarpatent**
**Patent- und Rechtsanwälte Part G mbB**
**Friedrichstrasse 31**
**80801 München (DE)**

(54) **REGISTRATION METHOD AND APPARATUS FOR OPTICAL COMMUNICATION NETWORK**

(57) A registration method for an optical communication network and an apparatus are disclosed, relating to the field of optical communication technologies. A discovery window opened by an OLT is determined based on a distance between an optical relay device and a next-level optical network device of the optical relay device, and the OLT has configured specified BWmap information for the optical relay device, so that in a process in which the OLT performs registration of the next-level optical network device of the optical relay device, the OLT does not need to open a large discovery window, and only needs to open a discovery window adapted to the next-level optical network device. Therefore, the OLT only needs to open a small discovery window in an SN serial number discovery process. Slots are reduced for the small discovery window, and service interruption time of another optical network device communicating with the OLT is shortened. This helps reduce an upstream delay jitter of the optical communication network and improve communication stability of the optical communication network.

FIG. 4

## Description

This application claims priority to Chinese Patent Application No. 202311327280.2, filed with the China National Intellectual Property Administration on October 13, 2023 and entitled "REGISTRATION METHOD FOR OPTICAL COMMUNICATION NETWORK AND APPARATUS", and further claims priority to Chinese Patent Application No. 202411419927.9, filed with the China National Intellectual Property Administration on October 11, 2024 and entitled "REGISTRATION METHOD FOR OPTICAL COMMUNICATION NETWORK AND APPARATUS", both of which are incorporated herein by reference in their entireties.

## TECHNICAL FIELD

This application relates to the field of optical communication technologies, and in particular, to a registration method for an optical communication network and an apparatus.

## BACKGROUND

A passive optical network (Passive Optical Network, PON) is an access network based on optical fiber link transmission. There is no electronic device that uses a power supply between an optical line terminal (Optical Line Terminal, OLT) and an optical network unit (Optical Network Unit, ONU) in the PON. In the PON, downstream transmission from the OLT to the ONU is in a broadcast manner, and upstream transmission from the ONU to the OLT is in a time division multiple access (Time Division Multiple Access, TDMA) manner. Therefore, during the upstream transmission from the ONU to the OLT, slots occupied by different ONUs cannot overlap, and information transmitted in overlapping slots cannot be correctly received by the OLT. Therefore, a slot allocated to the ONU during normal service grant needs to be determined through ranging performed in a registration phase of the ONU.

In a registration process of the ONU, the OLT delivers a grant instruction, and periodically opens a quiet window for serial number (serial number, SN) discovery (discovery window for short) for the ONU. In a slot corresponding to the discovery window, the ONU sends an SN signal to the OLT. The OLT then allocates, based on the received SN signal, a registration identifier to the ONU that is to go online, and opens a quiet window for ranging (ranging window for short). The OLT then performs, in a slot corresponding to the ranging window, ranging and granting on the ONU that is to go online, to complete the registration process of the ONU. In the slots corresponding to the discovery window and the ranging window, services of other ONUs connected to the OLT need to be interrupted. Therefore, when the OLT is connected to more ONUs through a plurality of optical repeaters and a quantity of these ONUs is large (for example, in a PON remote network), the OLT needs to open the discovery window for a long time. This causes a large delay jitter. This brings a challenge to a PON system in an application scenario that has a high requirement on a delay jitter. To reduce an upstream delay jitter caused by a registration process, a more effective registration method for an optical communication network is needed.

## SUMMARY

This application provides a registration method for an optical communication network and an apparatus, to resolve an upstream delay jitter caused by a registration process, and help improve communication efficiency of the optical communication network.

According to a first aspect, this application provides a registration method for an optical communication network. The registration method is performed by a first network device in an optical communication network. An optical communication connection is established between the first network device and an optical relay device. The optical relay device is configured with specified bandwidth map (bandwidth map, BWmap) information and a pre-assigned equalization delay that can be used in the optical communication network. The specified BWmap information is different from first BWmap information of the optical communication network. The registration method includes: The first network device sends a first overhead message and a first discovery message to the optical relay device, and opens a discovery window for the optical relay device, where the first overhead message indicates an optical parameter to be used for transmission of an optical signal by a next-level optical network device of the optical relay device, the first discovery message carries the specified BWmap information, and a size of the discovery window is determined based on a distance between the next-level optical network device of the optical relay device and the optical relay device. The first network device receives, in a slot corresponding to the discovery window, a first serial number (Serial number, SN) sent by the optical relay device, where the first SN is an SN sent by the next-level optical network device of the optical relay device based on the optical parameter. The first network device then sends a ranging request packet to the optical relay device based on the first SN, and sends a registration identifier of the next-level optical network device of the optical relay device. Finally, the first network device receives a ranging packet sent by the optical relay device, and sends a response packet to the optical relay device, where the ranging packet carries the registration identifier, and the response packet indicates an equalization delay to be used in the optical communication network by the next-level optical network device of the optical relay device.

In this application, the discovery window opened by the first network device is determined based on the distance between the optical relay device and the next-level optical network device of the optical relay device, and the first network device has configured the specified BWmap information for the optical relay device, so that in a process in which the first network device performs registration of the next-level optical network device of the optical relay device, the first network device does not need to open a large discovery window, and only needs to open a discovery window adapted to the next-level optical network device. Therefore, the first network device only needs to open a small discovery window in an SN discovery process. Slots are reduced for the small discovery window, and service interruption time of another optical network device communicating with the first network device is shortened. This helps reduce an upstream delay jitter of the optical communication network and improve communication efficiency and communication stability of the optical communication network.

In an optional implementation, before the first network device sends the first overhead message to the optical relay device, the registration method provided in this application further includes: The first network device sends configuration information to the optical relay device that has gone online in the optical communication network, where the configuration information indicates the specified BWmap information and the pre-assigned equalization delay that can be used in the optical communication network by the optical relay device. The first network device then receives a response message sent by the optical relay device, where the response message indicates that the optical relay device has set the configuration information into the optical relay device.

In this application, the first network device may deliver the configuration information, so that a to-be-registered optical network device communicates with the first network device by using specified BWmap information and a pre-assigned equalization delay that are indicated by configuration information adapted to the optical network device, to avoid a problem that the first network device cannot correctly identify each device because different optical network devices use same BWmap information and a same pre-assigned equalization delay. This helps improve accuracy of a registration process in the optical communication network.

In an optional implementation, that the first network device receives the ranging packet sent by the optical relay device, and sends the response packet to the optical relay device includes: The first network device receives the ranging packet sent by the optical relay device, and parses the ranging packet to obtain the registration identifier; and the first network device sends the response packet to the optical relay device based on the registration identifier. In this way, the first network device determines, based on an allocated registration identifier, that an optical network device that is to go online is a valid device, and then allocates a proper equalization delay to the optical network device that is to go online, so that the optical network device can access the optical communication network based on the equalization delay carried in a response message, to avoid a communication exception caused by access of an invalid optical network device to the optical communication network, for example, low communication efficiency between a plurality of optical network devices due to occupation of large bandwidth. This also improves security of the optical communication network.

In an optional implementation, before the first network device sends the first discovery message to the optical relay device, the method provided in this application further includes: The first network device sends a zeroth discovery message to the optical relay device, where the zeroth discovery message carries SN windowing grant information, and the SN windowing grant information indicates a discovery window opened by the first network device for any optical network device based on the first BWmap information of the optical communication network.

When the first network device is not only directly connected to the optical relay device, but also directly connected to another optical network device, if the another optical network device does not need to communicate with the first network device through the optical relay device, the another optical network device may send an SN of the another optical network device to the first network device via the zeroth discovery message sent by the first network device, so that the first network device allocates a registration identifier to the another optical network device based on the SN, and performs a registration process of the another optical network device.

According to a second aspect, this application provides a registration method for an optical communication network. The registration method is performed by an optical relay device. An optical communication connection is established between the optical relay device and a first network device in an optical communication network. The optical relay device is configured with specified BWmap information and a second pre-assigned equalization delay that can be used in the optical communication network. The specified BWmap information is different from first BWmap information of the optical communication network. The registration method includes: The optical relay device receives a first discovery message sent by the first network device, and sends a second discovery message to a second network device based on the first discovery message, where the first discovery message carries the specified BWmap information, the second discovery message carries second SN windowing grant information, the second SN windowing grant information indicates a discovery window opened by the first network device for the second network device based on the specified BWmap information, a size of the discovery window is determined based on a distance between a next-level optical network device of the optical relay device and the optical relay device, and the second network device is any one of next-level optical network devices of the optical relay device. The optical relay device then receives a first SN sent by the second network device, and sends the first SN to the first network device. The optical relay device receives a ranging request packet and a registration identifier that are sent by the first network device, and sends the ranging request packet and the registration identifier to the second network device, where the registration identifier is a registration identifier allocated by the first network device to the second network device based on the first SN. In addition, the optical relay device receives a ranging packet sent by the second network device, and sends the ranging packet to the first network device, where the ranging packet carries the registration identifier. Finally, the optical relay device receives a response packet sent by the first network device, and sends the response packet to the second network device, where the response packet indicates an equalization delay to be used in the optical communication network by the second network device.

In this application, the discovery window opened by the first network device is determined based on the distance between the optical relay device and the next-level optical network device of the optical relay device, and the first network device has configured the specified BWmap information for the optical relay device, so that in a process in which the first network device performs registration of the next-level optical network device of the optical relay device, the first network device does not need to open a large discovery window, and only needs to open a discovery window adapted to the next-level optical network device. Therefore, the optical relay device may set the second SN windowing grant information for the next-level optical network device (the second network device) based on the specified BWmap information. The discovery window indicated by the second SN windowing grant information is determined based on the distance between the next-level optical network device of the optical relay device and the optical relay device. Therefore, slots are reduced for the small discovery window, and service interruption time of another optical network device communicating with the first network device is shortened. This helps reduce an upstream delay jitter of the optical communication network and improve communication stability of the optical communication network.

In an optional implementation, an allocation identifier (Alloc ID) of the second discovery message determined based on the specified BWmap information is one of 254, 1020, 1021, 1022, or 1023.

In an optional implementation, before the optical relay device receives the first discovery message sent by the first network device, the registration method provided in this application further includes: The optical relay device receives a first overhead message sent by the first network device, and sends a second overhead message to the second network device based on the first overhead message. The first overhead message indicates an optical parameter to be used for transmission of an optical signal by the next-level optical network device of the optical relay device, the first overhead message carries a first pre-assigned equalization delay of the optical communication network, the second overhead message carries the second pre-assigned equalization delay, and the second network device is any one of next-level optical network devices of the optical relay device. It should be understood that, the optical relay device changes the first pre-assigned equalization delay in the overhead message to the second pre-assigned equalization delay, so that the next-level optical network device can perform SN response in a set slot, to avoid a problem of a registration error or a registration failure caused by no response of the next-level optical network device for a long time.

In an optional implementation, that the optical relay device sends the second overhead message to the second network device based on the first overhead message includes: The optical relay device changes the first pre-assigned equalization delay in the first overhead information to the second pre-assigned equalization delay that has been set in the optical relay device, to obtain the second overhead message; and the optical relay device sends the second overhead message to the second network device.

In an optional implementation, that the optical relay device sends the second discovery message to the second network device based on the first discovery message includes: The optical relay device converts the specified BWmap information in the first discovery message into the second SN windowing grant information, to obtain the second discovery message; and the optical relay device sends the second discovery message to the second network device.

In an optional implementation, before the optical relay device receives the first discovery message sent by the first network device, the registration method provided in this application further includes: The optical relay device receives a zeroth discovery message sent by the first network device, where the zeroth discovery message carries SN windowing grant information. The optical relay device then deletes the SN windowing grant information in the zeroth discovery message to obtain a failure message, and sends the failure message; or the optical relay device terminates a transmission process of the zeroth discovery message in the optical communication network. In this application, the optical relay device may end transmission of another optical signal after the SN, to avoid a problem that registration efficiency is reduced and an upstream delay jitter is increased because the first network device receives a large quantity of optical signals.

In an optional implementation, that the optical relay device receives the first SN sent by the second network device, and sends the first SN to the first network device includes: The optical relay device receives the first SN sent by the second network device; and the optical relay device sets, after receiving the first SN, an optical signal that is of the second network device and that is received in the discovery window as invalid optical signal.

According to a third aspect, this application provides a registration apparatus. The registration apparatus includes software units or modules configured to perform any one of the optional implementations of the first aspect or the second aspect.

According to a fourth aspect, this application provides an optical network device. The optical network device includes a processor, a memory, and a transceiver. The memory is configured to buffer specified BWmap information and a pre-assigned equalization delay that can be used in an optical communication network and that are configured on an optical relay device that establishes an optical communication connection to a network device, where the specified BWmap information is different from first BWmap information of the optical communication network. The transceiver and the processor collaboratively perform the method according to any one of the optional implementations of the first aspect.

According to a fifth aspect, this application provides an optical relay device. The optical relay device includes a processor and a transceiver. The processor and the transceiver are configured to perform the method in any one of the optional implementations of the second aspect.

According to a sixth aspect, this application provides a communication system. The communication system includes: an optical fiber, one network device provided in the fourth aspect, and one or more optical relay devices provided in the fifth aspect, where the optical fiber is configured to connect the devices.

For beneficial effects of any one of the third aspect to the sixth aspect, refer to the descriptions of any one of the optional implementations of the first aspect and the second aspect. Details are not described herein again. In this application, the implementations provided in the foregoing aspects may be further combined to provide more implementations.

## BRIEF DESCRIPTION OF DRAWINGS

FIG. 1 is a diagram of a structure of an optical communication network according to this application;
FIG. 2 is a diagram of a structure of a PON remote network according to this application;
FIG. 3 is a diagram of structures of an OLT, an optical relay device, and an ONU according to this application;
FIG. 4 is a schematic flowchart of a registration method for an optical communication network according to this application;
FIG. 5 is a diagram of comparison between different registration methods according to this application;
FIG. 6 is a diagram of a structure of a registration apparatus according to this application; and
FIG. 7 is a diagram of a structure of an optical network device according to this application.

## DESCRIPTION OF EMBODIMENTS

For clear and brief description of the following embodiments, related technologies are briefly described first.

A discovery window is a quiet window opened, in a process in which an ONU registers with an optical communication network, by an OLT for discovering an SN of the ONU that is to go online. In a slot corresponding to the discovery window, a service of another ONU that has registered with the optical communication network is interrupted. The slot corresponding to the discovery window is a time period in which the discovery window lasts after the OLT opens the discovery window. In some examples, the discovery window is also referred to as an SN discovery window. In a PON remote network scenario, the discovery window is a quiet window opened by the OLT for discovering SNs of a plurality of ONUs that are to go online and connected through one or more optical relay devices.

A ranging window is a quiet window opened, in a process in which an ONU registers with an optical communication network, by an OLT for ranging of the ONU that is to go online. In a slot corresponding to the ranging window, a service of another ONU that has registered with the optical communication network is interrupted. The slot corresponding to the ranging window is a time period in which the ranging window lasts after the OLT opens the ranging window. In a fiber to the room (Fiber To The Room, FTTR) scenario, the ranging window is a quiet window opened by a main ONU for ranging of a sub ONU that is to go online. In a PON remote network scenario, the ranging window is a quiet window opened by the OLT for ranging of a plurality of ONUs that are to go online and connected through one or more optical relay devices.

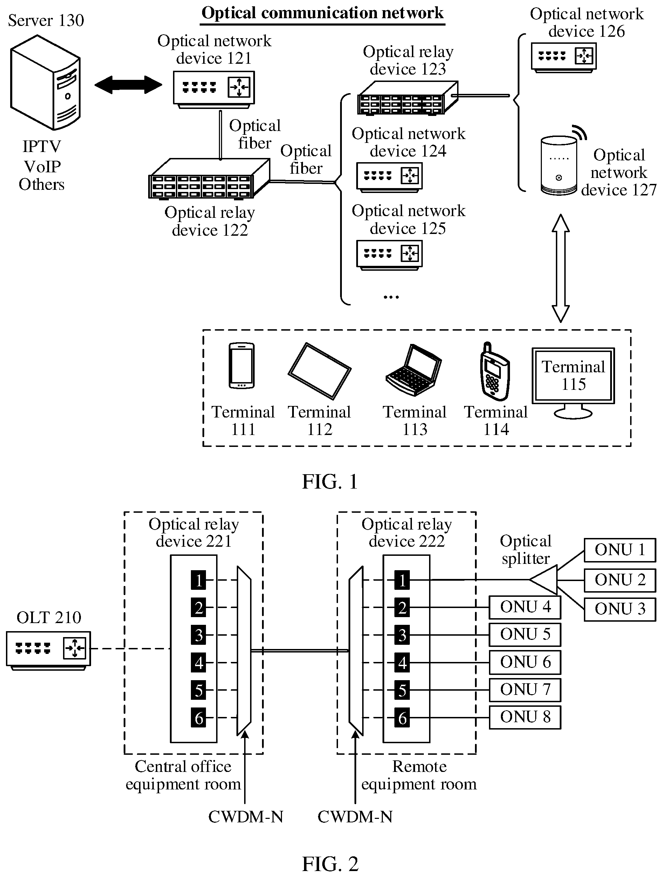

FIG. 1 is a diagram of a structure of an optical communication network according to this application. The optical communication network may also be referred to as an optical transport network. The optical communication network includes a plurality of optical network devices, and one or more of the optical network devices are configured to connect to user terminals (for example, terminals 111 to 115 shown in FIG. 1).

The terminal (terminal) may also be referred to as a terminal device, user equipment (user equipment, UE), a mobile station (mobile station, MS), a mobile terminal (mobile terminal, MT), or the like.

In some embodiments, the terminal may be a mobile phone (for example, the terminal 111 shown in FIG. 1), a tablet computer (for example, the terminal 112 shown in FIG. 1), a computer with a wireless transceiver function (for example, the terminal 113 shown in FIG. 1), a personal communication service (personal communication service, PCS) phone (for example, the terminal 114 shown in FIG. 1), a desktop computer (for example, the terminal 115 shown in FIG. 1), a virtual reality (Virtual Reality, VR) terminal device, an augmented reality (Augmented Reality, AR) terminal device, a wireless terminal in industrial control, a wireless terminal in smart home, or the like.

In this embodiment, the optical network device may be a routing forwarding device having an optical communication function, a home gateway, a network device of another form, or the like. For example, the routing forwarding device may be a router or a switch that supports optical fiber connection. The network device may alternatively be a broadband network gateway (broadband network gateway, BNG) or a broadband remote access server (Broadband Remote Access Server, BRAS) that has an optical communication function, or the like. The home gateway may be, for example, an optical network terminal (optical network terminal, ONT). For example, an optical network device 121, an optical network device 124, and an optical network device 125 shown in FIG. 1 may be optical network terminals. The optical network terminal may connect user equipment such as a PC and a mobile phone to the Internet. The home gateway may perform transmission of data of the following services: an internet access service (for example, an interactive web television service, including a video on demand service, a live broadcast service, a distance education service, or the like supported by the home gateway), an online game service (for example, a game terminal carries out a game service through the home gateway), an internet protocol (internet protocol, IP) telephone service, a video phone service, a video surveillance service, and the like. For another example, the home gateway may further implement home control and security service management on a remote network. For example, a user having a home gateway may access, during working or going out, an automated lighting, heating, and security system in an area covered by the home gateway. A specific technology and a specific device form that are used for the terminal are not limited in embodiments of this application.

For example, the optical network devices are wiredly connected through an optical cable. For example, an optical cable between an optical relay device 122 and an optical relay device 123 may be referred to as an access feeder optical cable, and an optical cable between the optical relay device 123 and an optical network device 126, or an optical cable between the optical relay device 123 and an optical network device 127 may include a distribution optical cable and an access-side optical cable. The distribution optical cable is an optical cable between the optical relay device 123 and an optical splitter (not shown in FIG. 1), and the access-side optical cable is an optical cable between the optical splitter and the optical network device 127.

The terminal can access a server via the network device. As shown in FIG. 1, a user may establish a wireless communication connection to the optical network device 127 through the terminal 111 by using a wireless fidelity (wireless-fidelity, Wi-Fi) technology, so that the terminal 111 sends a data packet to a server 130. For example, the optical network devices communicate with each other through an optical fiber, and the optical network device 127 communicates with each terminal through Wi-Fi. In an optional implementation, the optical network device 127 may be connected to each terminal through a Wi-Fi channel like HIlink®.

In some possible cases, the terminal may alternatively establish a communication connection to a radio access network device (radio access network, RAN) (not shown in FIG. 1) by using an optical communication technology, to access the server 130.

The server 130 may be an application server or an authentication and authorization server. The server 130 may provide a video service, a game service, a message service, a music service, an authentication and authorization service, and the like. The server 130 may further provide an interactive web television (Interactive TV, IPTV) service, an IP-based voice transmission service (Voice over Internet Protocol, VoIP) or another service, and the like. In an example, functions of a plurality of services may be integrated into the server 130. For example, the game service and the music service may be deployed on the server 130. In another example, functions of some services may be integrated into the server 130. For example, a part of the game service and a part of the video service are deployed on the server 130. The server 130 may further provide a plurality of virtual machines by using a virtualization technology, and the virtual machines provide various services. A deployment form of the service is not limited in embodiments of this application.

The optical network device is connected to the server 130 in a wireless or wired manner. FIG. 1 is merely a diagram. The optical communication network may further include another device that is not shown in FIG. 1. Quantities of terminal, optical network devices, and servers included in the optical communication network are not limited in embodiments of this application.

This application may be applied to a scenario like a PON, a passive optical local area network (passive optical LAN, POL), an industrial optical network, or a PON remote network. For example, in a PON scenario, an optical transmitting apparatus may be located at a user home or a user corridor, and an optical receiving apparatus may be located in an equipment room of an operator. In a POL scenario, an optical transmitting apparatus and an optical receiving apparatus may be located in a campus (for example, an enterprise or a school). In an industrial optical network scenario, an optical transmitting apparatus and an optical receiving apparatus may be located in an industrial manufacturing workshop. In an in-vehicle optical network scenario, an optical transmitting apparatus and an optical receiving apparatus may be disposed in a vehicle. For example, in the PON scenario, each optical network device may be an optical network unit (optical network unit, ONU) or an ONT, and the network device 121 may be an OLT. For another example, in the PON scenario, the network device 121 may be a main ONU, and the optical network device 124 may be a sub ONU. In the in-vehicle optical network scenario, the optical transmitting apparatus may be a vehicle interface unit (vehicle interface unit, VIU), and the optical receiving apparatus may be a mobile data center (MDC), a vehicle dynamic control (vehicle dynamic control, VDC), or a cockpit data center (cockpit data center, CDC). The technical solutions provided in this application may be further applicable to an optical backbone transmission network, data center optical transmission, short-range optical interconnection, wireless service fronthaul/backhaul, and the like. Specifically, the technical solutions provided in this application may be applied to the optical transmitting apparatuses and/or the optical receiving apparatuses corresponding to the foregoing different networks. A PON is used as an example. Embodiments of this application may be applied to a time division multiplexing-passive optical network (time division multiplexing-passive optical network, TDM-PON), or may be applied to a wavelength division multiplexing-passive optical network (WDM-PON). For example, the PON may be a GPON (Gigabit-Capable PON), a GPON-based upgraded XG-PON, a 10G EPON, or the like, or may be an optical communication network scenario like an EPON, an XGSPON, or a 50G PON. This is not limited in this application.

In this embodiment, a PON remote network scenario is used as an example to describe a registration method for an optical communication network provided in this application. The PON remote network scenario may be implemented by disposing optical relay devices (for example, the optical relay device 122 and the optical relay device 123) between an OLT and an ONU. FIG. 2 is a diagram of a structure of a PON remote network according to this application. As shown in FIG. 2, a plurality of ONUs (for example, an ONU 1 to an ONU 8) communicate with an OLT 210 through optical network devices such as an optical splitter and one-level or multi-level optical relay devices.

It should be understood that a PON is a passive optical network. For example, a line loss in a transmission process of the PON remote network determines a split ratio and a transmission distance. In the PON remote network, active one-level or multi-level optical relay devices are deployed in the PON network. These optical relay devices repeat and amplify optical signals, thereby resolving a problem that the split ratio and the transmission distance are limited in the PON remote network.

On an access side (a network side close to the OLT 210) of an optical communication network, an optical relay device 221 may be deployed in a central office equipment room. The optical relay device in the central office equipment room receives and sends an optical signal, for example, transmits a collected optical signal to the OLT 210 through an optical cable (for example, an optical fiber), to transmit data carried in the optical signal to a data communication layer of the optical communication network.

On a client side (a network side close to each ONU) of the optical communication network, an optical relay device 222 may be deployed in a remote equipment room. The optical relay device in the remote equipment room receives and sends an optical signal, for example, transmits a collected optical signal from each ONU to an upper-level optical relay device (for example, the optical relay device 221 in the central office equipment room) through an optical cable (for example, an optical fiber).

For example, signal frames sent by the ONU 1 to the ONU 8 to the OLT 210 are an optical signal t1 to an optical signal t8. After receiving the optical signal sent by each ONU, the OLT 210 performs a service or an operation indicated by the optical signal, for example, performs online, ranging, or data communication on the ONU.

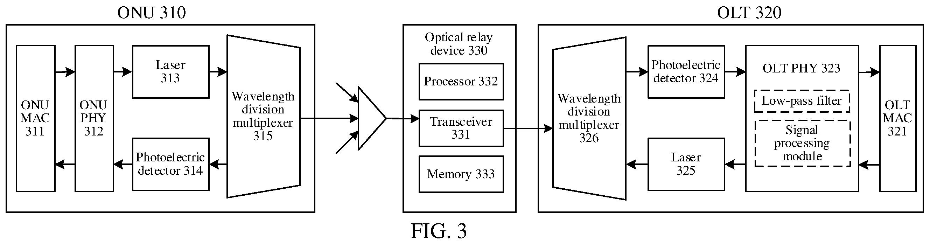

In a possible implementation, hardware implementation of the OLT, the optical relay device, and the ONU shown in FIG. 2 may be implemented in a manner provided in FIG. 3. FIG. 3 is a diagram of structures of an OLT, an optical relay device, and an ONU according to this application. The ONU 310 may be any one of the ONU 1 to the ONU 8 shown in FIG. 2. The OLT 320 may register the ONU 310 with an optical communication network. For example, the OLT 320 may be configured to implement a function of the OLT 210 shown in FIG. 2.

As shown in FIG. 3, the ONU 310 includes: an ONU media access control (media access control, MAC) 311, an ONU physical layer (physical layer, PHY) 312, a laser 313, and a photoelectric detector 314.

In a sending direction, the ONU MAC 311 may control on and off of the laser 313 through a transmit enabling port (Tx_En, also referred to as a switch pin). For example, if currently in a light emitting slot (or referred to as an occupied slot) of the ONU 310, the ONU MAC 311 controls the laser 313 to be turned on through the transmit enabling port; or if not in the light emitting slot of the ONU 310, the ONU MAC 311 controls the laser 313 to be turned off through the transmit enabling port. The ONU MAC 311 may further adjust physical parameters of the laser 313 through a transmit control port (Tx_Ctr), such as a laser bias current and a modulation current. The ONU MAC 311 may send service data to the ONU PHY 312 through a data port (Data), and the ONU PHY 312 transparently transmits the service data. The ONU PHY 312 is also referred to as a driver of the laser 313, and is configured to drive, based on an instruction of the transmit enabling port and/or the transmit control port of the ONU MAC 311, the laser to generate an optical signal. The laser 313 modulates the service data into the optical signal under control of the ONU PHY 312, and sends an upstream optical signal carrying the service data to the OLT 320 through an optical fiber.

In a receiving direction, the photoelectric detector 314 receives a downstream optical signal from the OLT 320, and converts the downstream optical signal into an electrical signal. The ONU PHY 312 transparently transmits the electrical signal, and the ONU MAC 311 parses the electrical signal to obtain the service data. The ONU 310 may further include a wavelength division multiplexer 315 that is configured to: send an upstream optical signal generated by the laser 313 to an optical fiber, and send a downstream optical signal received from the optical fiber to the photoelectric detector 314.

In this embodiment, the ONU 310 may further include a Wi-Fi PHY and an antenna. The Wi-Fi PHY is configured to establish a Wi-Fi channel (or referred to as a Wi-Fi link) with the OLT 320 through the antenna. For example, the Wi-Fi channel may include but is not limited to a HIlink® connection and an interconnection channel implemented based on a distributed system, for example, Harmony OS Connect™. The Harmony OS Connect™ is an inter-device interconnection manner obtained by integrating HIlink® and Harmony OS™. It should be noted that different vendors may record different names for the Wi-Fi channel based on information such as different hardware components in devices and different device names, to implement coordination between Wi-Fi communication and optical communication between the devices, and improve efficiency and robustness of the optical communication. For example, when the ONU 310 includes the Wi-Fi PHY and the antenna, the ONU 310 may be the optical network device 127 in FIG. 1, namely, a router or a switch that supports an optical communication function.

Wireless communication functions of the ONU 310 and the OLT 320 may be implemented by using an antenna, a mobile communication module, a modem processor, a baseband processor (not shown in the figure), and the like. For example, the antenna is configured to transmit and receive an electromagnetic wave signal. Each antenna may be configured to cover one or more communication frequency bands. Different antennas may be further multiplexed, to improve antenna utilization. For example, the antenna may be multiplexed as a diversity antenna in a wireless local area network. In some embodiments, the antenna may be used in combination with a tuning switch. For the mobile communication module, the ONU 310 is used as an example. At least some functional modules of the mobile communication module may be disposed in the Wi-Fi PHY included in the ONU 310, or at least some functional modules of the mobile communication module and at least some modules of the Wi-Fi PHY may be disposed in a same device.

The OLT 320 may include an OLT MAC 321, an OLT PHY 323 (including a signal processing module), a photoelectric detector 324, and a laser 325. In a receiving direction, the photoelectric detector 324 receives an upstream optical signal from the ONU 310, and converts the upstream optical signal into an electrical signal. The electrical signal may be an analog electrical signal or a digital electrical signal. The signal processing module may be implemented by using an analog device (for example, an amplifier) or a digital device (for example, a digital signal processor). Therefore, the signal processing module may perform analog related processing or digital electrical signal processing. The OLT MAC 321 parses the electrical signal that passes through the signal processing module, to obtain service data. In a sending direction, the OLT MAC 321 generates service data, and the signal processing module performs analog or digital related processing on the service data. The laser 325 modulates the service data into an optical signal under control of the OLT PHY 323, and sends a downstream optical signal carrying the service data to the ONU 310 through an optical fiber. The OLT 320 may further include a wavelength division multiplexer 326 that is configured to: send a downstream optical signal generated by the laser 325 to an optical fiber, and send an upstream optical signal received from the optical fiber to the photoelectric detector 324.

As shown in FIG. 3, the optical relay device 330 may include a processor 332. Optionally, the optical relay device 330 may further include a memory 333 and/or a transceiver 331. The processor 332 is coupled to the memory 333 and the transceiver 331, for example, may be connected to the memory 333 and the transceiver 331 through a communication bus.

The following describes each component of the optical relay device 330 in detail with reference to FIG. 3.

The processor 332 is a control center of the optical relay device 330, and may be one processor, or may be a collective name of a plurality of processing elements. For example, the processor 332 is one or more central processing units (central processing unit, CPU), or an application-specific integrated circuit (application-specific integrated circuit, ASIC), or is configured as one or more integrated circuits implementing embodiments of this application, for example, one or more digital signal processors (digital signal processor, DSP) or one or more field programmable gate arrays (field programmable gate array, FPGA).

Optionally, the processor 332 may perform various functions of the optical relay device 330 by running or executing a software program stored in the memory 333 and invoking data stored in the memory 333. During specific implementation, in an embodiment, the processor 332 may include one or more CPUs. Optionally, the optical relay device 330 may alternatively include a plurality of processors. Each of the processors may be a single-core processor (single-CPU), or may be a multi-core processor (multi-CPU). The processor herein may be one or more devices, circuits, and/or processing cores configured to process data (for example, computer program instructions).

The memory 333 is configured to store the software program for executing the solutions in this application, and the processor 332 controls the execution. For a specific implementation, refer to the foregoing method embodiments. Details are not described herein again. For example, the memory 333 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another optical disc storage, an optical disc storage (including a compact optical disc, a laser disc, an optical disc, a digital versatile optical disc, a blue optical disc, and the like), a magnetic disk storage medium or another magnetic storage device, or any other medium that can carry or store expected program code in an instruction or data structure form and can be accessed by a computer, but is not limited thereto. The memory 333 may be integrated with the processor 332, or may exist independently, and is coupled to the processor 332 through an interface circuit (not shown in FIG. 3) of the optical relay device 330. This is not specifically limited in embodiments of this application.

The transceiver 331 is configured to communicate with another communication apparatus. For example, the transceiver 331 may be configured to communicate with the ONU 310, the OLT 320, or another optical relay device. Optionally, the transceiver 331 may include a receiver and a transmitter (not separately shown in FIG. 3). The receiver is configured to implement a function of receiving an optical signal, and the transmitter is configured to implement a function of sending an optical signal.

Optionally, the transceiver 331 may be integrated with the processor 332, or may exist independently, and is coupled to the processor 332 through an interface circuit (not shown in FIG. 3) of the optical relay device 330. This is not specifically limited in embodiments of this application.

It should be noted that a structure of the optical relay device 330 shown in FIG. 3 does not constitute a limitation on the communication apparatus. An actual communication apparatus may include more or fewer components than those shown in the figure, combine some components, or have different component arrangements.

In addition, for technical effects of the optical relay device 330, refer to technical effects described in the following method embodiments. Details are not described herein.

Access, in an OLT, of an ONU to an optical communication network includes the following phases: a discovery phase, a ranging phase, an authentication phase, and a running phase. In the discovery phase, the OLT opens an SN discovery window for the ONU, and allocates a registration identifier to the ONU based on an obtained SN, for example, an identifier (identification, ID) of the ONU. In the ranging phase, the OLT opens a ranging window for the ONU, and allocates an equalization delay to the ONU based on a ranging packet of the ONU. The authentication phase includes SN authentication, password (password) authentication, and the like of the ONU on the OLT. The running phase includes: optical network unit management and control interface (ONU management and control interface, OMCI) configuration recovery, OMCI management, service flow communication, and the like. For example, the OMCI management includes establishing a service flow between the OLT and the ONU, encrypting the service flow, and performing forward error correction (forward error correction, FEC) on the service flow.

In a common technology, a PON remote network scenario is used as an example. When the OLT is connected to more ONUs through a plurality of optical repeaters and a quantity of these ONUs is large (for example, in a PON remote network), the OLT needs to open the discovery window for a long time. This causes a large delay jitter. This brings a challenge to a PON system in an application scenario that has a high requirement on a delay jitter.

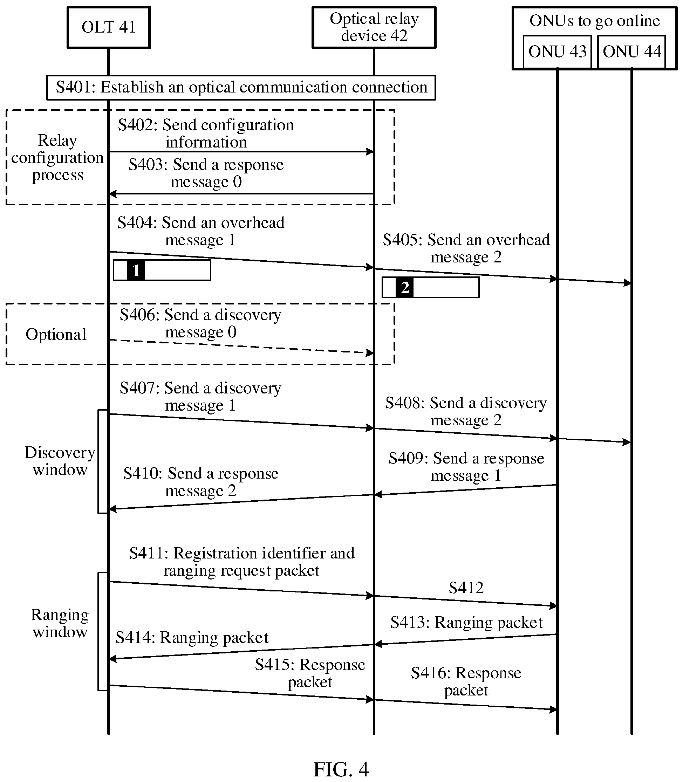

To reduce an upstream delay jitter caused by a registration process, based on the optical communication network, the OLT, the optical relay device, the ONU, and the like shown in FIG. 1 to FIG. 3, an embodiment of this application provides a possible implementation. FIG. 4 is a schematic flowchart of a registration method for an optical communication network according to this application. For hardware implementation and optional implementations of an OLT 41, an optical relay device 42, an ONU 43, and an ONU 44, refer to the foregoing descriptions in FIG. 1 to FIG. 3. Details are not described herein again. In some optional implementations, an ONU that is to go online in FIG. 4 may also be referred to as a next-level optical network device connected to the optical relay device 42.

Refer to FIG. 4. The registration method provided in this embodiment includes S401 to S416 below.

S401: The OLT 41 establishes an optical communication connection to the optical relay device 42.

For an implementation process of S401, the following provides a possible specific example. In this example, a data frame is a signal frame transmitted in an optical signal manner.

Step 1: The OLT 41 continuously broadcasts data frames to a plurality of optical relay devices 42, where each data frame carries control information, and the control information indicates a process like going online, ranging, or registration of the optical relay device 42 in an optical communication network. In this embodiment, an example is used for description with reference to FIG. 3. The data frame may be an optical signal generated by driving the laser 325 by the OLT PHY 323 after the OLT MAC 321 generates to-be-sent data.

Optionally, the data frame may further indicate the optical relay device 42 to forward one or more specific optical signals interrupt a transmission process of one or more specific optical signals in the optical relay device 42, or the like.

The following uses the optical relay device 42 as an example to describe a process of establishing the optical communication connection between the OLT 41 and the optical relay device 42.

Step 2: The optical relay device 42 performs frame synchronization on the received data frame, and establishes the optical communication connection to the OLT 41.

The frame synchronization means that the optical relay device 42 performs frame synchronization on a received serial signal. The frame synchronization means that the optical relay device 42 determines a start location and an end location of a data frame in the serial signal by identifying a start and an end of the frame. A frame synchronization method may include, but is not limited to, at least one of a character counting method, a head-to-tail delimiter method with character padding, a head-to-tail flag method with bit padding, and a physical layer coding violation method.

A frame synchronization process is described by using the head-to-tail flag method with bit padding as an example. A header of each data frame carries a string of specific bits (for example, 0101). If the optical relay device 42 identifies the specific bits, the optical relay device 42 determines to identify a header of a data frame, and considers data before a next header in serial data as data of the data frame, thereby implementing frame synchronization of the data frame. In some possible cases, the frame synchronization is also referred to as "frame delimitation".

In some optional embodiments, because frame lengths of all data frames are the same, after finding a frame header (for example, specific bits at a start location of the frame header are 0101) of a data frame 1, the optical relay device 42 may delay a frame length of one data frame and identify a header of a next data frame (for example, a data frame 2).

The foregoing example is merely a possible implementation of the head-to-tail flag method with bit padding provided in this embodiment, and should not be construed as a limitation on this application. The optical relay device 42 may alternatively use other frame synchronization methods to implement the frame synchronization of the data frame. For specific implementations of the character counting method, the head-to-tail delimiter method with character padding, and the physical layer coding violation method, refer to descriptions of a common technology. Details are not described herein.

Step 3: The optical relay device 42 parses the data frame to obtain the control information, and starts a process corresponding to the control information.

In this embodiment, if the control information indicates the optical relay device 42 and a next-level optical network device of the optical relay device 42 to go online on the optical communication network on the OLT 41, the process corresponding to the control information means that the optical relay device 42 starts a ranging and registration process, completes the ranging in the optical communication network, and goes online. Therefore, in some examples, the process of establishing the optical communication connection between the OLT and the optical relay device may also be referred to as a process in which the optical relay device and the OLT complete ranging and go online. After the OLT 41 establishes the optical communication connection to the optical relay device 42, the following step S402 continues to be performed.

S402: The OLT 41 sends configuration information to the optical relay device 42.

Corresponding to the process of S402, the optical relay device 42 receives the configuration information sent by the OLT 41.

The configuration information includes: specified bandwidth map (bandwidth map, BWmap) information and a pre-assigned equalization delay (preEqd) that can be used in the optical communication network by the optical relay device 42. The specified BWmap information indicates a location range of a single data frame in a plurality of data frames (which may also be referred to as a data block) continuously transmitted in a burst transmission mode and a location of a bandwidth allocation slot in the burst. Each allocation slot is controlled by a specific bandwidth allocation structure specific to BWmap in a downstream frame. The pre-assigned equalization delay (preEqd) indicates a channel to be used by a next-level optical network device in a service communication process between the OLT and the next-level optical network device of the optical relay device.

In this embodiment, the specified BWmap information is different from first BWmap information in the optical communication network.

It should be noted that FIG. 4 shows only one optical relay device connected to the OLT 41. However, in some optional implementations, the OLT 41 allocates different configuration information to a plurality of different optical relay devices. In other words, BWmap information and equalization delays that can be used by next-level optical network devices of different optical relay devices are different, to avoid a problem of data transmission disorder in the optical communication network because different optical network devices use a same equalization delay. This helps improve communication robustness of the optical communication network.

For example, a process in which the OLT 41 determines configuration information to be allocated to different optical relay devices may be random, or may be performed based on specified logic or algorithms. This is not limited in this application.

S403: The optical relay device 42 sends a response message 0 to the OLT 41.

Corresponding to the process of S403, the OLT 41 receives the response message 0 sent by the optical relay device 42.

The response message 0 indicates that the optical relay device 42 has set the configuration information into the optical relay device 42. In some possible examples, the response message 0 is also referred to as a configuration success response, a configuration response message, or the like. This is not limited in this application.

S404: The OLT 41 sends an overhead message 1 to the optical relay device 42.

Corresponding to the process of S404, the optical relay device 42 receives the overhead message 1 sent by the OLT 41.

The overhead message 1 is also referred to as a first overhead message, and the overhead message 1 carries a first pre-assigned equalization delay (first preEqd), where the first pre-assigned equalization delay (first preEqd) is a preEqd set by the OLT 41 in a discovery phase of each optical network device that is to go online, and the first preEqd may be preset or set by a user. In some cases, the first preEqd may also be referred to as a standard preEqd of the OLT 41. This is not limited in this application.

S405: The optical relay device 42 sends, based on the overhead message 1, an overhead message 2 to the ONU that is to go online.

It should be noted that, using FIG. 4 as an example, the ONU that is to go online refers to the ONU 43. Corresponding to the process of S405, the ONU 43 receives the overhead message 2 sent by the optical relay device 42.

The overhead message 2 is also referred to as a second overhead message, and the overhead message carries a second pre-assigned equalization delay (second preEqd). The second preEqd is a pre-assigned equalization delay included in the configuration information in S402. In some possible cases, the second preEqd may also be referred to as a dedicated preEqd of the optical relay device 42.

For the optical relay device 42, S405 above may include the following step: The optical relay device 42 changes the pre-assigned equalization delay (first preEqd) in the overhead message 1 to the pre-assigned equalization delay (second preEqd) carried in the configuration information, to obtain the overhead message 2. For example, the pre-assigned equalization delay in the overhead message 1 is a preEqd 1, and the pre-assigned equalization delay in the overhead message 2 is a preEqd 2.

The foregoing overhead messages all indicate optical parameters to be used by the next-level optical network device of the optical relay device 42. The optical parameter herein may include but is not limited to information such as a frequency used for transmission of an optical signal by the ONU to the optical relay device 42, a signal transmit power used by a laser (for example, the laser 313 in FIG. 3) in the ONU, or the like.

In this embodiment, the OLT may configure different pre-assigned equalization delays for different optical relay devices. In an ONU registration process, for ONUs that access the optical communication network through the optical relay devices, the OLT may set different pre-assigned equalization delays for the ONUs connected to the different optical relay devices, so that the OLT opens, in the ONU registration process, a discovery window adapted to an optical relay device only for the specific optical relay device. The adapted discovery window is smaller than a discovery window opened by the OLT for all the ONUs without difference, thereby reducing an upstream delay jitter in the optical communication network.

S406: The OLT 41 sends a discovery message 0 to the optical relay device 42.

Corresponding to the process of S406, the optical relay device 42 receives the discovery message 0 sent by the OLT 41.

The discovery message 0 is also referred to as a zeroth discovery message. The discovery message 0 carries SN Request windowing grant information that is also referred to as SN windowing grant information, and the SN (Request) windowing grant information indicates a discovery window opened by the OLT 41 for any optical network device that is to go online.

When the OLT is not only directly connected to the optical relay device, but also directly connected to another optical network device, if the another optical network device does not need to communicate with the OLT through the optical relay device, the another optical network device may send an SN of the another optical network device to the OLT via the zeroth discovery message sent by the OLT, so that the OLT allocates a registration identifier to the another optical network device based on the SN, and performs a registration process of the another optical network device.

In this embodiment, the OLT 41 opens the discovery window for the ONU connected through the optical relay device. Therefore, the SN (Request) windowing grant information carried in the discovery message 0 is not applicable to the ONU 43. To enable the ONU 43 to be successfully registered, the following provides two optional implementations.

In a first optional implementation, after the optical relay device 42 receives the discovery message 0 sent by the OLT 41, the optical relay device 42 deletes the SN (Request) windowing grant information in the discovery message 0, to obtain a failure message. In addition, the optical relay device 42 sends the failure message to the next-level optical network device of the optical relay device 42. In this way, the next-level optical network device of the optical relay device 42 cannot learn of the SN (Request) windowing grant information in the discovery message 0, and does not perform the registration process in the discovery window indicated by the SN (Request) windowing grant information.

In a second optional implementation, after the optical relay device 42 receives the discovery message 0 sent by the OLT 41, the optical relay device 42 terminates a transmission process of the discovery message 0 in the optical communication network. The next-level optical network device of the optical relay device 42 then does not receive the discovery message 0, and does not perform the registration process in the discovery window indicated by the SN (Request) windowing grant information in the discovery message 0.

In the foregoing two implementations, the next-level optical network device of the optical relay device does not receive the SN (Request) windowing grant information, and therefore does not report an SN. Consequently, the SN cannot be effectively received by the OLT. This helps improve accuracy of the registration process in the optical communication network. The foregoing two optional implementations are merely examples provided in this embodiment, and should not be construed as a limitation on this application.

S407: The OLT 41 sends a discovery message 1 to the optical relay device 42, and opens a discovery window for the optical relay device 42.

Corresponding to the process of S407, the optical relay device 42 receives the discovery message 1 sent by the OLT 41.

The discovery message 1 carries the specified BWmap information in the foregoing configuration information.

A size of the discovery window is determined based on a distance (which may also be referred to as an access distance of the next-level network of the optical relay device) between the next-level optical network device of the optical relay device 42 and the optical relay device 42. In this embodiment, the size of the discovery window is determined based on a distance between the optical relay device 42 and the ONU 43.

For example, if the distance between the optical relay device 42 and the ONU 43 is in a range of 0 to 40 kilometers (kilometers, km), the size of the discovery window may be transmission slots corresponding to four data frames. In different protocols, transmission slots of a single data frame are different. This is not limited in this application.

S408: The optical relay device 42 sends a discovery message 2 to the ONU 43 based on the discovery message 1.

In the optical relay device 42, the optical relay device 42 converts the specified BWmap information in the discovery message 1 into second SN Request windowing grant information (or referred to as second SN windowing grant information), to generate the discovery message 2. The optical relay device 42 then sends the discovery message 2 to the ONU 43. The second SN Request windowing grant information indicates the discovery window opened by the OLT 41 for the ONU 43. A common point between the second SN Request windowing grant information and the SN Request windowing grant information carried in the discovery message 1 lies in that: formats of the two are the same. A difference between the second SN Request windowing grant information and the SN Request windowing grant information carried in the discovery message 1 lies in that: the second SN Request windowing grant information and the SN Request windowing grant information carried in the discovery message 1 include different values. The discovery window indicated by the second SN Request windowing grant information is consistent with the discovery window opened by the OLT 41 in S407.

A common point between the discovery message 1 and the discovery message 2 lies in that: formats of the two discovery messages are the same, and both discovery messages carry information indicating the next-level optical network device of the optical relay device 42 to start a registration process. For example, the discovery message 1 and the discovery message 2 indicate the ONU 43 to report an SN of the ONU 43. For example, in response to the received overhead message, the ONU 43 sends SN information of the ONU 43 to the OLT 41. Specifically, in a transmission process of the SN information, the SN information needs to be forwarded by the optical relay device 42.

A difference between the discovery message 1 and the discovery message 2 lies in that: windowing grant information fields carried in the two discovery messages include different content, where the discovery message 1 carries the specified BWmap information, and the discovery message 2 carries the second SN Request windowing grant information generated based on the specified BWmap information.

For example, both the discovery message 1 and the discovery message 2 include an Alloc ID field. For example, a value of the Alloc ID field in the discovery message 1 is 256 or another value, and a value of the Alloc ID field in the discovery message 2 is determined based on a standard protocol used in this embodiment of this application.

In a first optional example, for example, in the GPON standard protocol, the value of the Alloc ID field in the discovery message 2 is 254.

In a second optional example, for example, in the 50G PON standard protocol, the value of the Alloc ID field in the discovery message 2 is 1020, 1021, 1022, or 1023.

In a third optional example, for example, in the XG-PON standard protocol, the value of the Alloc ID field in the discovery message 2 is 1021, 1022, or 1023.

In a fourth optional example, for example, in the XGSPON standard protocol, the value of the Alloc ID field in the discovery message 2 is 1021, 1022, or 1023.

The foregoing four optional examples are merely optional values of the Alloc ID field provided in this embodiment of this application. Based on development and change of a future optical communication technology, the value of the Alloc ID field in the discovery message 2 may alternatively be another value.

In this embodiment, the second SN Request windowing grant information carried in the discovery message 2 received by the ONU is not windowing grant information generated by the OLT based on the first BWmap information of the optical communication network, but windowing grant information generated by the optical relay device based on the specified BWmap information. Because the discovery window corresponding to the specified BWmap information is smaller than a discovery window corresponding to the first BWmap information, the ONU can implement the ONU registration process only in a smaller discovery window. To be specific, in an SN discovery phase, the discovery window opened by the OLT for the next-level optical network device of the optical relay device is smaller than a standard discovery window, and service interruption time of another ONU connected to the OLT is shortened. This helps reduce an upstream delay jitter of the optical communication network and improve communication stability of each optical network device in the optical communication network.

S409: The ONU 43 sends a response message 1 to the optical relay device 42 in response to the discovery message 2.

Corresponding to the process of S409, the optical relay device 42 receives the response message 1 sent by the ONU 43.

The response message 1 carries the SN of the ONU 43, and the SN uniquely identifies the ONU 43 in the optical communication network. The response message 1 may also be referred to as an SN message, an SN response, an SN response message, an SN response packet, or the like. This is not limited in this application.

In this embodiment, a process of sending the response message 1 by the ONU 43 may be implemented based on the optical parameter carried in the overhead message 2. The following uses an example in which a structure of the ONU 43 is that of the ONU 310 in FIG. 3 to describe an example of the process of sending the response message 1 by the ONU. The process of sending the response message 1 includes the following step 1 and step 2.

Step 1: The ONU MAC 311 in the ONU 310 sends, to the ONU PHY 312, an adjustment instruction: adjusting a bias current (Ibias) based on the optical parameter, so that an adjusted Ibias is a threshold current (IT) in the optical parameter; and turning off a modulation current (Imod) and turning off the Tx_En. For example, the threshold current is 5 mA (milli ampere, mA), 10 mA, or another value.

Step 2: After the laser 313 is stabilized, the ONU MAC 311 sends information about a specific frequency through the Tx_En; and the laser 313 keeps turning on and off an optical port, to generate an optical signal corresponding to the information about the specific frequency, and sends the generated optical signal to the OLT 320.

The information about the specific frequency is the optical parameter carried in the overhead message 2, and the response message carries a registration identifier corresponding to the ONU 310.

For example, a maximum power of the optical signal generated in step 2 is -23.4 per milliwatt (dBm), and a minimum power of the optical signal is -45.8 dBm.

In this embodiment, an indicator for describing the power of the optical signal may be obtained through Formula 1 below.

$$dBm = 10 * \log (P/1mW) \quad \text{Formula 1}$$

P represents a power value in a unit of watts.

Correspondingly, after receiving the optical signal in step 2, the OLT performs optical-to-electrical conversion on the received optical signal based on a photoelectric detector (for example, the photoelectric detector in FIG. 3) in the OLT, to obtain an electrical signal. A signal processing module (for example, the signal processing module in FIG. 3) in the OLT then processes the electrical signal obtained through the optical-to-electrical conversion, to obtain a bit stream corresponding to the response message.

S410: The optical relay device 42 sends a response message 2 to the OLT 41 based on the response message 1.

Corresponding to the process of S410, the OLT 41 receives the response message 2 sent by the optical relay device 42.

The response message 2 also carries the SN of the ONU 43.

In this example, both the response message 2 and the response message 1 are optical signals. A difference between the response message 2 and the response message 1 lies in that: transmission of an optical signal after the SN of the ONU 43 in the response message 1 continues to be performed, while an optical signal after the SN of the ONU 43 in the response message 2 is set to an invalid optical signal; or the optical relay device 42 terminates a transmission process of an optical signal after the SN of the ONU 43 in the response message 2. That the optical relay device 42 sets the optical signal after the SN of the ONU 43 in the response message 2 to the invalid optical signal may include: The optical relay device 42 sets the optical signal to an optical signal of a preset frequency, and so on.

In this way, for a process in which the ONU reports the SN to the OLT, transmission of the optical signal after the SN in the response message may not need to be performed or may be performed as transmission of an invalid optical signal, so that the OLT does not need to process the optical signal, thereby reducing consumption of processing resources in the OLT.

S411: The OLT 41 sends a registration identifier and a ranging request packet to the optical relay device 42 based on the SN carried in the response message 2.

Corresponding to the process of S411, the optical relay device 42 receives the registration identifier and the ranging request packet that are sent by the OLT 41.

For example, the registration identifier is a registration identifier allocated by the OLT 41 to the ONU 43 based on the SN of the ONU 43. For example, the registration identifier is an identifier (identification, ID) of the ONU 43, and the ID of the ONU 43 is denoted as ONU ID 1. The registration identifier is registration information that needs to be used by the ONU in a process of going online. During communication between the ONU 43 and the OLT 41, the OLT 41 uniquely identifies the ONU 43 based on the ONU ID 1, to avoid forwarding data sent to the ONU 43 to another ONU, thereby improving accuracy of communication between the ONU 43 and the OLT 41.

In some optional implementations, the registration identifier may alternatively be an ID of another type of home optical network device, for example, an ID (SFU ID for short) of a single family unit (single family unit, SFU), an ID (HGU ID for short) of a home gateway unit (home gateway unit, HGU), or an ID (SBU ID for short) of a single business unit (single business unit, SBU). In the text of this application, embodiments are described by using the ONU ID as an example. However, it should not be understood that the registration identifier provided in this application is merely the ONU ID.

For another example, the ranging request packet includes the registration identifier (for example, the ONU ID 1) of the ONU 43.

In this embodiment, the OLT 41 may further open a ranging window for the ONU 43. A size of the ranging window may also be determined based on the access distance between the ONU 43 and the optical relay device 42. An implementation of the ranging window is similar to that of the discovery window. Details are not described herein again.

S412: The optical relay device 42 sends the registration identifier of the ONU 43 and the ranging request packet to the ONU 43.

Corresponding to the process of S412, the ONU 43 receives the registration identifier of the ONU 43 and the ranging request packet that are sent by the optical relay device 42.

The ranging request packet indicates the ONU 43 to perform a ranging process of the ONU 43 based on the received registration identifier.

S413: The ONU 43 sends a ranging packet to the optical relay device 42 based on the registration identifier of the ONU 43 in response to the ranging request packet.

Corresponding to the process of S413, the optical relay device 42 receives the ranging packet sent by the ONU 43.

The ranging packet carries the registration identifier of the ONU 43. In some possible examples, the ranging packet 1 may also be referred to as a first ranging packet, another name, or the like.

S414: The optical relay device 42 sends the ranging packet in S413 to the OLT 41.

Corresponding to the process of S414, the OLT 41 receives the ranging packet sent by the optical relay device 42.

S415: The OLT 41 sends a response packet to the optical relay device 42 in response to the ranging packet.

Corresponding to the process of S414, the optical relay device 42 receives the response packet sent by the OLT 41.

The response packet indicates an equalization delay to be used for communication in the optical communication network by the ONU 43. The equalization delay indicates a channel used by the ONU 43 to implement service data communication after the ONU 43 accesses the optical communication network through the OLT 41.

It may be understood that, in a plurality of optical network devices that access the optical communication network through the OLT 41, different optical network devices use different channels, that is, different equalization delays to be used by ONUs are different. This helps avoid a case in which an error occurs in service data communication because different ONUs occupy a same channel, thereby improving accuracy of communication between the optical network devices in the optical communication network.

S416: The optical relay device 42 sends the response packet in S415 to the ONU 43.

Corresponding to the process of S416, the ONU 43 receives the response packet sent by the optical relay device 42.

In this embodiment, the discovery window opened by the OLT is determined based on the distance between the optical relay device and the next-level optical network device of the optical relay device, and the OLT has configured the specified BWmap information for the optical relay device, so that in the process in which the OLT performs registration of the next-level optical network device of the optical relay device, the OLT does not need to open a large discovery window, and only needs to open a discovery window adapted to the next-level optical network device.

Therefore, the OLT only needs to open a small discovery window in the SN discovery process. Slots are reduced for the small discovery window, and service interruption time of another optical network device communicating with the OLT is shortened. This helps reduce an upstream delay jitter of the optical communication network and improve communication stability of the optical communication network.

In some optional implementations, the ONU that is to go online is alternatively another ONU (for example, the ONU 44), another optical relay device, or the like. For a registration process of these ONUs with the optical relay device, refer to the registration process of the ONU 43 provided in this embodiment. Details are not described herein again.

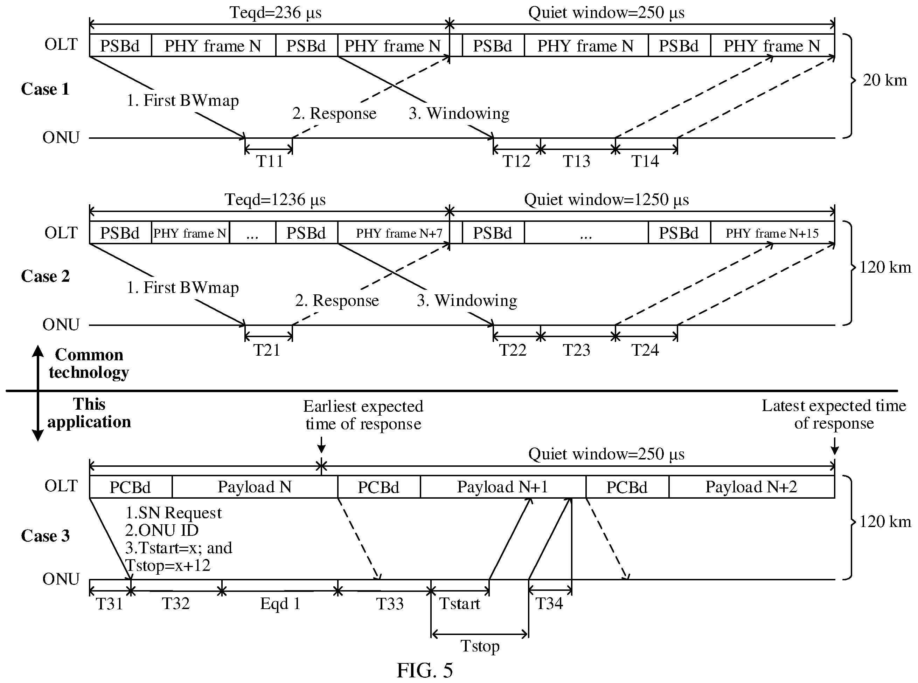

The following describes, with reference to the accompanying drawings, beneficial effects of the registration method provided in this application by using an example. FIG. 5 is a diagram of comparison between different registration methods according to this application.

In Case 1 and Case 2 in FIG. 5, each data frame includes a downstream physical synchronization block (physical synchronization block downstream, PSBd) and a physical layer frame (physical frame, PHY frame). The PSBd is used to provide functions such as lock synchronization and frame delimitation, and the PHY frame is used to carry a payload part in the data frame.

In Case 1 in FIG. 5, a transmission distance between an OLT and an ONU is 20 km, and a procedure in which the ONU registers with the OLT includes: 1. The OLT sends overhead information carrying first BWmap information to the ONU. 2. The ONU sends a response message to the OLT in response to the received overhead information, where response time (response time) of the ONU is T11. 3. The OLT receives the response message sent by the ONU, and sends a discovery message to the ONU, to start a registration process of the ONU on the OLT. T12 is response time of the ONU after receiving the discovery message, T13 is start time at which the ONU performs an SN discovery phase, and T14 is random time (random time) between a moment at which the ONU responds to the discovery message and a moment at which the ONU sends an SN. It should be noted that, for example, an equalization delay Teqd between a moment at which the OLT sends the overhead message and the moment at which the ONU sends the SN is 236 μs. In this case, the OLT needs to open a quiet window (discovery window) of at least 250 μs, to meet a requirement of the OLT for the SN discovery phase of the ONU. Therefore, because the OLT opens the discovery window, an upstream delay jitter of at least 250 μs exists between the OLT and the ONU.

In Case 2 in FIG. 5, a transmission distance between an OLT and an ONU is 120 km, and a procedure in which the ONU registers with the OLT is the same as that in Case 1. T21 is response time (response time) of the ONU after receiving an overhead message, T22 is response time of the ONU after receiving a discovery message, T13 is start time at which the ONU performs an SN discovery phase, and T14 is random time (random time) between a moment at which the ONU responds to the discovery message and a moment at which the ONU sends an SN. A difference between Case 2 and Case 1 lies in that: the distance between the OLT and the ONU is longer, and the discovery window opened by the OLT is 1250 μs. Therefore, because the OLT opens the discovery window, an upstream delay jitter of at least 1250 μs exists between the OLT and the ONU.

With reference to Case 1 and Case 2 in FIG. 5, when the distance between the ONU and the OLT is increased, the OLT opens a discovery window for all ONUs that are to go online without difference. As a result, an upstream delay jitter of another ONU connected to the OLT increases rapidly, interruption time of each service in the optical communication network increases, and communication performance of the optical communication network deteriorates.

Compared with a common technology, the registration method provided in this application can reduce the upstream delay jitter. As shown in Case 3 in FIG. 5, each data frame includes a downstream physical layer control block (physical control block downstream, PCBd) and a payload (payload). As shown in FIG. 5, three data frames respectively include a load N, a load N+1, and a load N+2. The PCBd may be configured to provide functions such as lock synchronization, timing, and dynamic bandwidth allocation. For more content of the PCBd, refer to descriptions of a common technology. Details are not described herein.

A transmission distance between an OLT and an ONU is 120 km, and a procedure in which the ONU registers with the OLT includes: 1. The OLT sends a discovery message to the ONU through an optical relay device. For content and implementation of the discovery message, refer to the related descriptions of the discovery message 1 and the discovery message 2 above. The ONU feeds back an SN of the ONU to the OLT in response to the discovery message. 2. The OLT receives the SN sent by the ONU, allocates a registration identifier (ONU ID) to the ONU, and opens a ranging window. The ONU sends a ranging packet to the OLT through the optical relay device based on the registration identifier and a ranging request packet that are received. 3. The OLT responds to the ranging packet, allocates an equalization delay to the ONU, and sends the equalization delay to the ONU in a format of a ranging message. For more detailed content of Case 3, refer to the foregoing descriptions in FIG. 4. Details are not described herein again. With reference to the content in FIG. 5, T31 is a propagation delay (propagation delay), and T11=0.1 μs. T32 is response time of the ONU (ONU response time) to the discovery message. preEqd 1 is a pre-assigned equalization delay of the ONU. T33 is random time (random time) between a moment at which the ONU responds to the discovery message and a moment at which the ONU sends the SN. Tstart is start time in SN (Request) windowing grant information. Tstop is end time in the SN (Request) windowing grant information. T34 is a propagation delay (propagation delay) between the moment at which the ONU sends the SN and a moment at which the OLT receives the SN. With reference to the embodiment in FIG. 4, the discovery window opened by the OLT for the ONU is associated with the distance between the ONU and the optical relay device. Therefore, a discovery quiet window that the OLT needs to open needs only 250 μs, and is far smaller than the quiet window in Case 2, thereby reducing an upstream delay jitter in a PON remote network.

It may be understood that, to implement the functions in the foregoing embodiments, the ONU, the OLT, and the optical relay device include corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

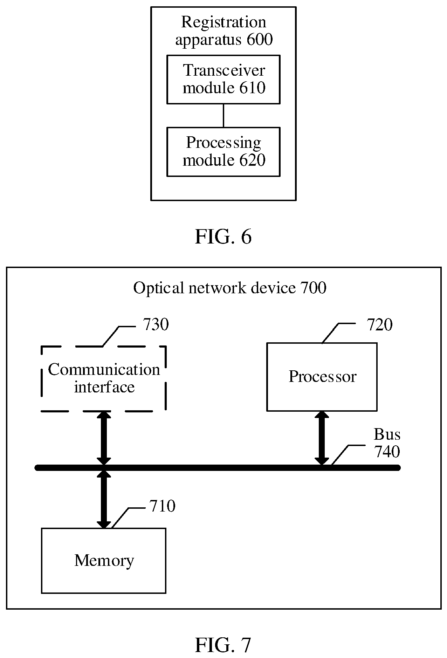

The foregoing describes in detail the registration method provided in embodiments with reference to FIG. 1 to FIG. 5. The following describes a registration apparatus provided in embodiments with reference to FIG. 6.

FIG. 6 is a diagram of a structure of a registration apparatus according to this application. The registration apparatus 600 may be configured to implement a function of any ONU in the foregoing method embodiments, and therefore can also implement beneficial effects of the foregoing method embodiments. In this embodiment, the registration apparatus 600 may be the optical network device 121, the optical relay device 122, another optical network device or optical relay device shown in FIG. 1, or any optical relay device or OLT shown in the subsequent drawings, or may be a module (for example, a chip) used in an optical relay device or an OLT.

As shown in FIG. 6, the registration apparatus 600 includes a transceiver module 610 and a processing module 620. The transceiver module 610 and the processing module 620 can collaboratively implement the steps in the foregoing method embodiments. For more detailed descriptions of the transceiver module 610 and the processing module 620, directly refer to the related descriptions of each optical relay device or OLT in the method embodiments shown in the foregoing accompanying drawings. Details are not described herein again.

When the registration apparatus implements, by using software, the registration method shown in any one of the foregoing accompanying drawings, the registration apparatus and units of the registration apparatus may alternatively be software modules. A processor invokes the software module to implement the foregoing registration method. The processor may be a central processing unit (central processing unit, CPU), an application-specific integrated circuit (application-specific integrated circuit, ASIC) implementation, or a programmable logic device (programmable logic device, PLD). The PLD may be a complex programmable logic device (complex programmable logic device, CPLD), a field programmable gate array (field programmable gate array, FPGA), generic array logic (generic array logic, GAL), or any combination thereof.

For more detailed descriptions of the registration apparatus, refer to the related descriptions in embodiments shown in the accompanying drawings. Details are not described herein again. It may be understood that the registration apparatus shown in the foregoing accompanying drawings is merely an example provided in this embodiment. The registration apparatus may include more or fewer units based on different ranging processes or services. This is not limited in this application.

When the registration apparatus is implemented by using hardware, the hardware may be implemented by using a processor or a chip system. The chip system includes one or more chips, and each chip includes an interface circuit and a control circuit. The interface circuit is configured to: receive data from another device other than the chip and transmit the data to the control circuit, or send data from the control circuit to another device other than the chip.

The control circuit and the interface circuit are configured to implement, by using a logic circuit or by executing code instructions, the method according to any one of the possible implementations of the foregoing embodiments. For beneficial effects, refer to the descriptions of any aspect of the foregoing embodiments. Details are not described herein again.

It may be understood that the processor in embodiments of this application may be a CPU, or may be another general-purpose processor, a digital signal processor (digital signal processor, DSP), an ASIC, an FPGA or another programmable logic device, a transistor logic device, a hardware component, or any combination thereof. The general-purpose processor may be a microprocessor or any regular processor.

In addition, the registration apparatus 600 shown in FIG. 6 may alternatively be implemented by using an optical network device. FIG. 7 is a diagram of a structure of an optical network device according to this application. The optical network device 700 includes a memory 710 and at least one processor 720. The processor 720 can implement the registration method provided in the foregoing embodiments. The memory 710 is configured to store software instructions corresponding to the foregoing registration method. In an optional implementation, in a hardware implementation, the optical network device 700 may be a chip or a chip system in which one or more processors 720 are packaged. For example, when the optical network device 700 is configured to implement the method steps in the foregoing embodiments, the processor 720 included in the optical network device 700 performs the steps of the foregoing method and possible substeps of the method. In an optional case, the optical network device 700 may further include a communication interface 730, and the communication interface 730 may be configured to receive and send data. For example, the communication interface 730 is configured to receive a ranging packet, send a ranging packet, or the like. The communication interface 730 may be implemented by using an interface circuit included in the optical network device 700.

In this embodiment of this application, the communication interface 730, the processor 720, and the memory 710 may be connected through a bus 740. The bus 740 may be classified into an address bus, a data bus, a control bus, or the like. The bus 740 may be a peripheral component interconnect express (Peripheral Component Interconnect Express, PCIe) bus, an extended industry standard architecture (extended industry standard architecture, EISA) bus, a unified bus (unified bus, Ubus or UB), a compute express link (compute express link, CXL) bus, a cache coherent interconnect for accelerators (cache coherent interconnect for accelerators, CCIX) bus, or the like.

It should be noted that the optical network device 700 may further perform a function of the registration apparatus 600 shown in FIG. 6. Details are not described herein.

The optical network device 700 provided in this embodiment may be any one of the foregoing OLTs, or another optical network device having a data processing function. This is not limited in this application. For example, the optical network device 700 may be any one of the foregoing optical network devices, for example, the OLT 41 or the optical network device 121.

In addition, the registration apparatus 600 shown in FIG. 6 may alternatively be implemented by using an optical relay device. When the registration apparatus 600 is implemented by using the optical relay device, for hardware implementation of the optical relay device, refer to the related descriptions in FIG. 3. Details are not described herein again.

The method steps in embodiments of this application may alternatively be implemented by a processor executing software instructions. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a network device or a terminal device. Certainly, the processor and the storage medium may alternatively exist as discrete components in a network device or a terminal device.

This application further provides a communication system. The communication system includes an optical fiber, one primary network device, and at least one secondary network device. The optical fiber is configured to connect the network devices. The network device may be the foregoing ONU.

All or some of the foregoing embodiments may be implemented by using software, hardware, firmware, or any combination thereof. When software is used to implement the embodiments, all or some of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium like a floppy disk, a hard disk, or a magnetic tape, may be an optical medium like a digital video disc (digital video disc, DVD), or may be a semiconductor medium like a solid-state drive (solid-state drive, SSD).

The foregoing descriptions are merely specific implementations of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A registration method for an optical communication network, wherein the method is performed by a first network device, an optical communication connection is established between the first network device and an optical relay device, the optical relay device is configured with specified bandwidth map BWmap information and a pre-assigned equalization delay that can be used in the optical communication network, and the specified BWmap information is different from first BWmap information of the optical communication network; and
the method comprises:

sending, by the first network device, a first overhead message and a first discovery message to the optical relay device, and opening a discovery window for the optical relay device, wherein the first overhead message indicates an optical parameter to be used for transmission of an optical signal by a next-level optical network device of the optical relay device, the first discovery message carries the specified BWmap information, and a size of the discovery window is determined based on a distance between the next-level optical network device of the optical relay device and the optical relay device;

receiving, by the first network device in a slot corresponding to the discovery window, a first serial number SN sent by the optical relay device, wherein the first SN is an SN sent by the next-level optical network device of the optical relay device based on the optical parameter;

sending, by the first network device, a ranging request packet to the optical relay device based on the first SN, and sending a registration identifier of the next-level optical network device of the optical relay device; and

receiving, by the first network device, a ranging packet sent by the optical relay device, and sending a response packet to the optical relay device, wherein the ranging packet carries the registration identifier, and the response packet indicates an equalization delay to be used in the optical communication network by the next-level optical network device of the optical relay device.

2. The method according to claim 1, wherein before sending, by the first network device, the first overhead message to the optical relay device, the method further comprises:

sending, by the first network device, configuration information to the optical relay device that has gone online in the optical communication network, wherein the configuration information indicates the specified BWmap information and the pre-assigned equalization delay that can be used in the optical communication network by the optical relay device; and

receiving, by the first network device, a response message sent by the optical relay device, wherein the response message indicates that the optical relay device has set the configuration information into the optical relay device.

3. The method according to claim 1 or 2, wherein receiving, by the first network device, the ranging packet sent by the optical relay device, and sending the response packet to the optical relay device comprises:

receiving, by the first network device, the ranging packet sent by the optical relay device, and parsing the ranging packet to obtain the registration identifier; and

sending, by the first network device, the response packet to the optical relay device based on the registration identifier.

4. The method according to any one of claims 1 to 3, wherein before sending, by the first network device, the first discovery message to the optical relay device, the method further comprises:

sending, by the first network device, a zeroth discovery message to the optical relay device, wherein the zeroth discovery message carries SN windowing grant information, and the SN windowing grant information indicates a discovery window opened by the first network device for any optical network device based on the first BWmap information.

5. A registration method for an optical communication network, wherein the method is performed by an optical relay device, an optical communication connection is established between the optical relay device and a first network device in an optical communication network, the optical relay device is configured with specified bandwidth map BWmap information and a second pre-assigned equalization delay that can be used in the optical communication network, and the specified BWmap information is different from first BWmap information of the optical communication network; and the method comprises:

receiving, by the optical relay device, a first discovery message sent by the first network device, and sending a second discovery message to a second network device based on the first discovery message, wherein the first discovery message carries the specified BWmap information, the second discovery message carries second SN windowing grant information, the second SN windowing grant information indicates a discovery window opened by the first network device for the second network device based on the specified BWmap information, a size of the discovery window is determined based on a distance between a next-level optical network device of the optical relay device and the optical relay device, and the second network device is any one of next-level optical network devices of the optical relay device;

receiving, by the optical relay device, a first serial number SN sent by the second network device, and sending the first SN to the first network device;

receiving, by the optical relay device, a ranging request packet and a registration identifier that are sent by the first network device, and sending the ranging request packet and the registration identifier to the second network device, wherein the registration identifier is a registration identifier allocated by the first network device to the second network device based on the first SN;

receiving, by the optical relay device, a ranging packet sent by the second network device, and sending the ranging packet to the first network device, wherein the ranging packet carries the registration identifier; and

receiving, by the optical relay device, a response packet sent by the first network device, and sending the response packet to the second network device, wherein the response packet indicates an equalization delay to be used in the optical communication network by the second network device.

6. The method according to claim 5, wherein before receiving, by the optical relay device, the first discovery message sent by the first network device, the method further comprises:

receiving, by the optical relay device, a first overhead message sent by the first network device, and sending a second overhead message to the second network device based on the first overhead message, wherein

the first overhead message indicates an optical parameter to be used for transmission of an optical signal by the next-level optical network device of the optical relay device, the first overhead message carries a first pre-assigned equalization delay of the optical communication network, the second overhead message carries the second pre-assigned equalization delay, and the second network device is any one of next-level optical network devices of the optical relay device.

7. The method according to claim 6, wherein sending, by the optical relay device, the second overhead message to the second network device based on the first overhead message comprises:

changing, by the optical relay device, the first pre-assigned equalization delay in the first overhead information to the second pre-assigned equalization delay that has been set in the optical relay device, to obtain the second overhead message; and

sending, by the optical relay device, the second overhead message to the second network device.

8. The method according to any one of claims 5 to 7, wherein sending, by the optical relay device, the second discovery message to the second network device based on the first discovery message comprises:

converting, by the optical relay device, the specified BWmap information in the first discovery message into the second SN windowing grant information, to obtain the second discovery message; and

sending, by the optical relay device, the second discovery message to the second network device.

9. The method according to claim 8, wherein an allocation identifier Alloc ID in the second discovery message determined based on the specified BWmap information is one of 254, 1020, 1021, 1022, or 1023.

10. The method according to claim 8 or 9, wherein before receiving, by the optical relay device, the first discovery message sent by the first network device, the method further comprises:

receiving, by the optical relay device, a zeroth discovery message sent by the first network device, wherein the zeroth discovery message carries SN windowing grant information; and

deleting, by the optical relay device, the SN windowing grant information in the zeroth discovery message to obtain a failure message, and sending the failure message; or terminating, by the optical relay device, a transmission process of the zeroth discovery message in the optical communication network.

11. The method according to any one of claims 5 to 10, wherein receiving, by the optical relay device, the first SN sent by the second network device, and sending the first SN to the first network device comprises:

receiving, by the optical relay device, the first SN sent by the second network device; and

terminating, by the optical relay device after receiving the first SN, an optical signal that is of the second network device and that is received in the discovery window.

12. A registration apparatus, comprising modules configured to perform the method according to any one of claims 1 to 11.

13. An optical network device, comprising a processor, a memory, and a transceiver, wherein the memory is configured to buffer specified bandwidth map BWmap information and a pre-assigned equalization delay that can be used in an optical communication network and that are configured on an optical relay device that establishes an optical communication connection to a network device, wherein the specified BWmap information is different from first BWmap information of the optical communication network; and

the transceiver and the processor collaboratively perform the method according to any one of claims 1 to 4.

**14.** An optical relay device, comprising a processor and a transceiver, wherein the processor and the transceiver are configured to collaboratively perform the method according to any one of claims 5 to 11.

**15.** A communication system, comprising: an optical fiber, one optical network device according to claim 13, and one or more optical relay devices according to claim 14, wherein the optical fiber is configured to connect the devices.

**Optical communication network**

Server 130

IPTV
VoIP
Others

Optical network
device 121

Optical
fiber

Optical relay
device 122

Optical
fiber

Optical relay
device 123

Optical network
device 124

Optical network
device 125

...

Optical network
device 126

Optical
network
device 127

Terminal
111

Terminal
112

Terminal
113

Terminal
114

Terminal
115

FIG. 1

OLT 210

Optical relay
device 221

1
2
3
4
5
6

Central office
equipment room

CWDM-N

Optical relay
device 222

1
2
3
4
5
6

Remote
equipment room

CWDM-N

Optical
splitter

ONU 1
ONU 2
ONU 3
ONU 4
ONU 5
ONU 6
ONU 7
ONU 8

FIG. 2

## ONU 310

FIG. 3

FIG. 4

FIG. 5

**Case 1**

OLT — PSBd | PHY frame N | PSBd | ... | PHY frame N | PSBd | PHY frame N | PSBd | PHY frame N

Teqd=236 µs

Quiet window=250 µs

20 km

1. First BWmap
2. Response
3. Windowing

ONU — T11 — T12 — T13 — T14

**Case 2**

OLT — PSBd | PHY frame N | PSBd | ... | PHY frame N+7 | PSBd | ... | PSBd | PHY frame N+15

Teqd=1236 µs

Quiet window=1250 µs

120 km

1. First BWmap
2. Response
3. Windowing

ONU — T21 — T22 — T23 — T24

**Common technology**

**This application**

**Case 3**

OLT — PCBd | Payload N | PCBd | Payload N+1 | PCBd | Payload N+2

Quiet window=250 µs

120 km

Earliest expected time of response

Latest expected time of response

1. SN Request
2. ONU ID
3. Tstart=x; and Tstop=x+12

ONU — T31 — T32 — Eqd 1 — T33 — Tstart — Tstop — T34

Registration
apparatus 600

Transceiver
module 610

Processing
module 620

FIG. 6

Optical network device 700

730

Communication
interface

720

Processor

Bus
740

710

Memory

FIG. 7

## INTERNATIONAL SEARCH REPORT

| International application No. |
| --- |
| **PCT/CN2024/124692** |

| A. | CLASSIFICATION OF SUBJECT MATTER |
| --- | --- |

H04Q 11/00(2006.01)i

According to International Patent Classification (IPC) or to both national classification and IPC

| B. | FIELDS SEARCHED |
| --- | --- |

Minimum documentation searched (classification system followed by classification symbols)

IPC: H04Q H04B H04L

Documentation searched other than minimum documentation to the extent that such documents are included in the fields searched

Electronic data base consulted during the international search (name of data base and, where practicable, search terms used)

CNTXT, ENTXTC, ENTXT, VEN: 光线路终端, 带宽, 映射, 指定, 发现窗, 静默窗, 开窗, 窗口, 距离, 大小, 序列号, 注册, 测距, 光网络单元, 光中继, 均衡时延, OLT, BWmap, bandwidth, window, discover+, mute, distance, SN, register, ONU, preEqd

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 114430372 A (NANJING ZTE NEW SOFTWARE CO., LTD.) 03 May 2022 (2022-05-03) <br> description, paragraphs 30-121 | 1-15 |
| A | CN 116170712 A (ZTE CORP.) 26 May 2023 (2023-05-26) <br> entire document | 1-15 |
| A | WO 2022242071 A1 (ZTE CORP.) 24 November 2022 (2022-11-24) <br> entire document | 1-15 |
| A | CN 114666683 A (CHINA MOBILE COMMUNICATION LTD., RESEARCH INSTITUTE et al.) 24 June 2022 (2022-06-24) <br> entire document | 1-15 |
| A | JP 2019009500 A (NIPPON TELEGRAPH AND TELEPHONE CORP.) 17 January 2019 (2019-01-17) <br> entire document | 1-15 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **06 January 2025** | **13 January 2025** |

| Name and mailing address of the ISA/CN | Authorized officer |
| --- | --- |
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/124692**

| Patent document cited in search report | | | Publication date (day/month/year) | Patent family member(s) | | | Publication date (day/month/year) |
|---|---|---|---|---|---|---|---|
| CN | 114430372 | A | 03 May 2022 | WO | 2022089186 | A1 | 05 May 2022 |
| CN | 116170712 | A | 26 May 2023 | WO | 2023093703 | A1 | 01 June 2023 |
| | | | | EP | 4440140 | A1 | 02 October 2024 |
| WO | 2022242071 | A1 | 24 November 2022 | CN | 115379314 | A | 22 November 2022 |
| CN | 114666683 | A | 24 June 2022 | | None | | |
| JP | 2019009500 | A | 17 January 2019 | | None | | |

Form PCT/ISA/210 (patent family annex) (July 2022)

**REFERENCES CITED IN THE DESCRIPTION**

**Patent documents cited in the description**

*   CN 202311327280
*   CN 202411419927